# EUROPEAN PATENT APPLICATION

(11) **EP 3 432 239 A1**
(43) Date of publication of application: **23.01.2019**
(21) Application number: 18184663.5
(22) Date of filing: 20.07.2018
(51) Int. Cl.: G06Q 20/20, G07G 1/00, G07G 1/14

(54) **SERVER FOR MANAGING TRANSACTION SETTLEMENT DATA FROM DIFFERENT TYPES OF POINT-OF-SALE DEVICES**

(30) Priority: 21.07.2017 JP 2017141555
(71) Applicant: Toshiba TEC Kabushiki Kaisha, Tokyo 141-8562 (JP)
(72) Inventor: HAGIWARA, Masaru, Shinagawa-ku,, Tokyo 141-8562 (JP)
(74) Representative: Takeuchi, Maya

(57) **Abstract**

According to an embodiment, a server manages transaction settlement data generated by a first type of point-of-sale (POS) device and a second type of POS device. The server includes a storage device, a communication interface, and a processor. The communication interface receives first settlement data generated by a first POS device of the first type. The processor determines whether predetermined information is included with the first settlement data. The storage device stores the first settlement data only if the predetermined information is included. The communication interface receives second settlement data generated by a second POS device of the second type, the second settlement data not including the predetermined information. The storage device stores the second settlement data. The processor performs an accounting processing on the stored first and second settlement data.

## Description

### FIELD

Embodiments described herein relate to a server for managing transaction settlement data from different types of point-of-sale devices, a related system, and a related method.

### BACKGROUND

In the related art, in stores such as supermarkets, convenience stores, clothing stores, and the like, a point-of-sale (POS) system is used to manage sales of the commodities purchased by customers and sales data of the store.

The POS system includes one or more POS terminals and a store server which is a host terminal of the POS terminals. Each POS terminal performs sales registration processing and settlement processing of the commodities purchased by the customers, and the store server receives and stores sales data from each POS terminal and manages sales data.

There is a case where commodity sales registration processing and settlement processing are performed by using a simplified (for example, tablet type) POS terminal different from a standard POS terminal. This simplified POS terminal is often manufactured by a manufacturer that is different from the standard POS terminal. The items of settlement information to be generated may be different between the standard POS terminal and the simplified POS terminal.

In such a case, the store server may not receive the settlement information from the simplified POS terminal.

To this end, there is provided a server for managing transaction settlement data generated by a first type of point-of-sale (POS) device and a second type of POS device, the server comprising: a storage device; a communication interface; and a processor programmed to: control the communication interface to receive first settlement data generated by a first POS device of the first type, the first settlement data corresponding to a completed transaction performed by the first POS device, determine whether predetermined information is included with the first settlement data, control the storage device to store the first settlement data only if the predetermined information is included, control the communication interface to receive second settlement data generated by a second POS device of the second type, the second settlement data corresponding to a completed transaction performed by the second POS device and not including the predetermined information, control the storage device to store the second settlement data, and perform an accounting processing on the stored first and second settlement data.

Preferably, the first settlement data is received from the first POS device that generated the first settlement data, and the second settlement data is received from a tablet server.

Preferably, the storage device includes a first storage unit and a second storage unit. In this case, the first storage unit is configured to store the first settlement information on condition that predetermined information is included in the first settlement information and the second storage unit is configured to store the second settlement information separately from the first settlement information.

According to the present invention the first storage unit for storing first settlement information on condition that predetermined information is included in the first settlement information when receiving the first settlement information including information on a sold commodity generated by the first POS device.

According to the present invention second storage unit for storing second settlement information separately from the first settlement information when receiving the second settlement information including information on a sold commodity generated by the second POS device, in which data items of the settlement information to be generated are different from by the first POS device.

Preferably, the second settlement data is received from the tablet server at a predetermined timing.

Preferably, the first settlement data is received from the first POS device that generated the first settlement data at a timing corresponding to when the transaction performed by the first POS device is completed.

Preferably, the first settlement data is received from the first POS device that generated the first settlement data at a predetermined timing.

Preferably, the predetermined information is a cashier code corresponding to a cashier who operated the first POS device for the completed transaction.

Preferably, if the predetermined information is not included with the first settlement data, the processor controls the communication interface to transmit, to the first POS device, a request to transmit the predetermined information.

The present invention also relates to a point-of-sale (POS) system comprising: a first server; at least one first POS device of a first type in communication with the first server; a second server in communication with the first server; and at least one second POS device of a second type in communication with the second server, wherein the first POS device transmits, to the first server, first settlement data generated by the first POS device, the first settlement data corresponding to a completed transaction performed by the first POS device, the second POS device transmits, to the second server, second settlement data generated by the second POS device, the second settlement data corresponding to a completed transaction performed by the second POS device and not including the predetermined information, the second server transmits, to the first server, the second settlement data, and the first server: determines whether predetermined information is included with the first settlement data transmitted from the first POS device, and stores the first settlement data only if the predetermined information is included, stores the second settlement data transmitted from the second server, and performs an accounting processing on the stored first and second settlement data.

Preferably, the second settlement data is transmitted to the first server from the second server at a predetermined timing.

Preferably, the first settlement data is transmitted to the first server from the first POS device that generated the first settlement data at a timing corresponding to when the transaction performed by the first POS device is completed.

Preferably, the first settlement data is transmitted to the first server from the first POS device that generated the first settlement data at a predetermined timing.

Preferably, the predetermined information is a cashier code corresponding to a cashier who operated the first POS device for the completed transaction.

Preferably, if the predetermined information is not included with the first settlement data, the first server transmits, to the first POS device, a request to transmit the predetermined information.

The present invention also relates to a method for managing transaction settlement data generated by a first type of point-of-sale (POS) device and a second type of POS device, the method comprising: receiving first settlement data generated by a first POS device of the first type, the first settlement data corresponding to a completed transaction performed by the first POS device; determining whether predetermined information is included with the first settlement data; storing the first settlement data only if the predetermined information is included; receiving second settlement data generated by a second POS device of the second type, the second settlement data corresponding to a completed transaction performed by the second POS device and not including the predetermined information; storing the second settlement data; and performing an accounting processing on the stored first and second settlement data.

Preferably, the first settlement data is received from the first POS device that generated the first settlement data, and the second settlement data is received from a tablet server.

Preferably, the second settlement data is received from the tablet server at a predetermined timing.

Preferably, the first settlement data is received from the first POS device that generated the first settlement data at a timing corresponding to when the transaction performed by the first POS device is completed.

Preferably, the first settlement data is received from the first POS device that generated the first settlement data at a predetermined timing.

Preferably, the predetermined information is a cashier code corresponding to a cashier who operated the first POS device for the completed transaction.

The method may further comprise: if the predetermined information is not included with the first settlement data, transmitting, to the first POS device, a request to transmit the predetermined information.

### DESCRIPTION OF THE DRAWINGS

FIG. 1 is a schematic diagram showing a POS system according to an embodiment.
FIG. 2 is a block diagram showing an example hardware configuration of a POS terminal.
FIG. 3 is a block diagram showing an example hardware configuration of a store server.
FIG. 4 is a block diagram showing an example hardware configuration of a tablet POS terminal.
FIG. 5 is a block diagram showing an example hardware configuration of a tablet server.
FIG. 6 is a flowchart showing a flow of control processing of the POS terminal.
FIG. 7 is a flowchart showing a flow of control processing of the tablet POS terminal.
FIG. 8 is a flowchart showing a flow of control processing of the tablet server.
FIG. 9 is a functional block diagram showing a functional configuration of the store server.
FIG. 10 is a flowchart showing a flow of control processing of the store server.

### DETAILED DESCRIPTION

Embodiments provide a server for managing transaction settlement data from different types of point-of-sale devices.

According to an embodiment, a server manages transaction settlement data generated by a first type of point-of-sale (POS) device and a second type of POS device. The server includes a storage device, a communication interface, and a processor. The processor is programmed to control the communication interface to receive first settlement data generated by a first POS device of the first type, the first settlement data corresponding to a completed transaction performed by the first POS device. The processor determines whether predetermined information is included with the first settlement data, and controls the storage device to store the first settlement data only if the predetermined information is included. The processor controls the communication interface to receive second settlement data generated by a second POS device of the second type, the second settlement data corresponding to a completed transaction performed by the second POS device and not including the predetermined information. The processor controls the storage device to store the second settlement data, and performs an accounting processing on the stored first and second settlement data.

An embodiment will be described in detail below with reference to drawings. In the embodiment, a store server is described as an example of a first server. In addition, in the embodiment, a tablet server is described as an example of a second server. In addition, in the embodiment, a POS terminal is described as an example of the first type of POS device. In addition, in the embodiment, a tablet POS terminal which is a simplified POS terminal is described as an example of the second POS device. In addition, in an embodiment, a POS system is described as an example. The present exemplary embodiment is not limited by the embodiment described below.

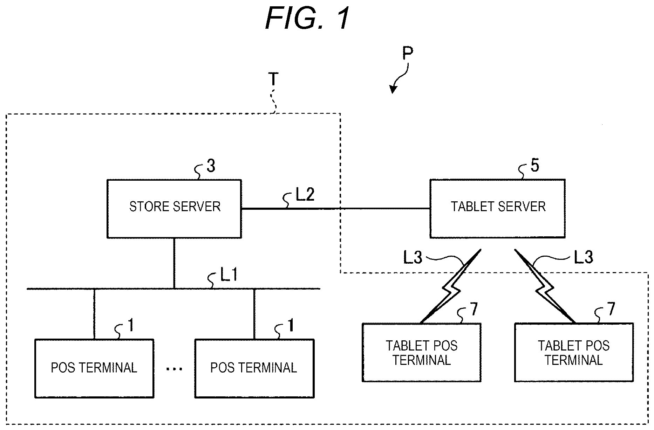

FIG. 1 is a schematic diagram showing a POS system P according to an embodiment. The POS system P includes a plurality of POS terminals 1, a store server 3, a tablet server 5, and a tablet POS terminal 7. The POS terminal 1, the store server 3, the tablet server 5, and the tablet POS terminal 7 are provided in a shop T. The tablet server 5 may be installed either outside the shop T or inside the shop T. In the embodiment, the table server 5 is installed outside the shop T.

The POS terminal 1 and the store server 3 communicate with each other via a communication line L1 such as a local area network (LAN). That is, the POS terminal 1 and the store server 3 mutually transmit and receive data, commands, and the like.

In addition, the store server 3 and the tablet server 5 communicate each other via a communication line L2. That is, the store server 3 and the tablet server 5 mutually transmit and receive data, commands, and the like.

In addition, the tablet server 5 and the tablet POS terminal 7 communicate with each other via a wireless communication line L3. That is, the tablet server 5 and the tablet POS terminal 7 mutually transmit and receive data, commands and the like.

The POS terminal 1 executes sales registration processing and settlement processing with respect to a commodity to be sold at the store T. The sales registration processing includes capturing or optically reading a symbol such as a barcode or the like attached to a commodity to be sold or an image of the symbol to acquire a commodity code, displaying the commodity information (commodity name, price, and the like)corresponding to the commodity read from a commodity master list based on the acquired commodity code, and storing the commodity information in a RAM or the like. The settlement processing includes displaying the total amount relating to the transaction based on the commodity information stored in the RAM or the like in association with the sales registration processing, calculating and displaying change based on the money (cash) deposited by the customer, and instructing a change machine to issue the change. In accordance with the settlement processing, the POS terminal 1 generates the first settlement information which includes: the commodity information, total amount, deposit amount, change amount, cashier code (predetermined information), and the like. That is, the first settlement information generated by the POS terminal 1 includes sales data of a commodity and a cashier code. The first settlement information is printed on receipt paper and issued as a receipt. The cashier code specifies a cashier in charge of the transaction. That is, the cashier code corresponds to the cashier who signed in to the POS terminal 1.

The POS terminal 1 transmits the first settlement information generated by the settlement processing to the store server 3 via the communication line L2.

The store server 3 stores the first settlement information or the like received from each connected POS terminal 1. The store server 3 stores the first settlement information when the received first settlement information includes a cashier code. When the received first settlement information does not include the cashier code, the first settlement information is not stored. In addition, the store server 3 manages the sales data based on the stored first settlement information.

In addition, the store server 3 receives second settlement information generated by the tablet POS terminal 7 and received from the tablet server 5.

The tablet POS terminal 7 is a tablet PC. The tablet POS terminal 7 is provided by, for example, a tenant operating company that operates a tenant in the shop T. The tenant frequently opens in the store T and sometimes leaves the store T. Therefore, the tablet POS terminal 7 is often a product of a manufacturer different from the POS terminal 1 and the store server 3.

The tablet POS terminal 7 executes sales registration processing and settlement processing with respect to the commodity to be sold at the tenant. In addition, the tablet POS terminal 7 generates the second settlement information which includes: commodity information, total amount, deposit amount, change amount, and the like, in accordance with the settlement processing. That is, the second settlement information generated by the tablet POS terminal 7 includes sales data corresponding to a commodity, but does not include a cashier code. In other words, the second settlement information generated by the tablet POS terminal 7 has data item different from the first settlement information.

The tablet POS terminal 7 transmits the second settlement information generated by the settlement processing to the tablet server 5 via the wireless communication line L3. The tablet POS terminal 7 is not connected to the communication line L1.

The tablet server 5 stores the second settlement information or the like received from the tablet POS terminal 7. In addition, the tablet server 5 transmits the stored second settlement information to the store server 3.

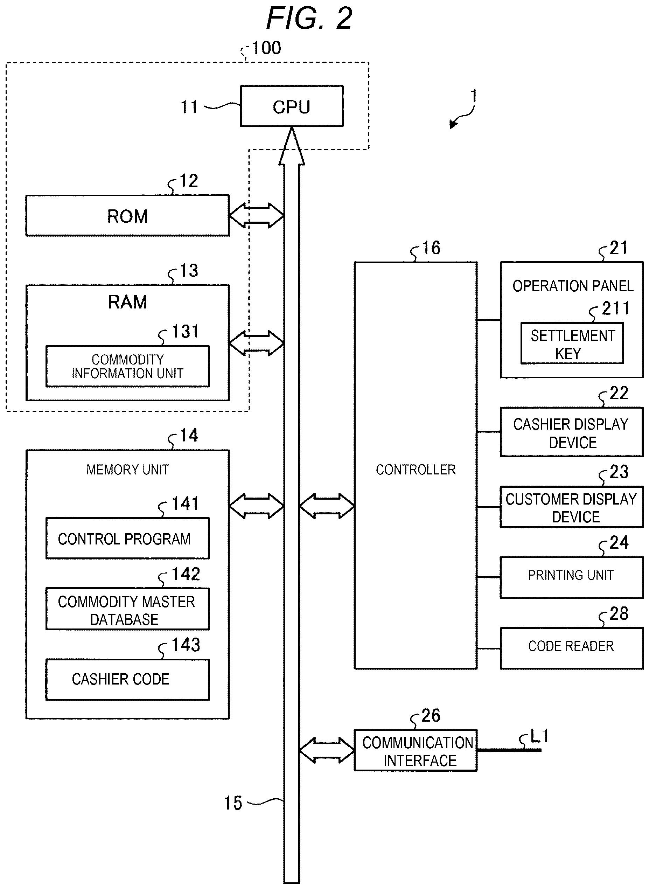

Hereinafter, the hardware configuration of the POS terminal 1, the store server 3, the tablet POS terminal 7, and the tablet server 5 will be described. First, the hardware configuration of the POS terminal 1 is described. FIG. 2 is a block diagram showing a hardware configuration of the POS terminal 1. As shown in FIG. 2, the POS terminal 1 includes a central processing unit (CPU) 11, a read-only memory (ROM) 12, a random access memory (RAM) 13, a memory unit 14, and the like. The CPU 11 controls various components. The ROM 12 stores various programs. The RAM 13 loads programs and various data. The memory unit 14 stores various programs. The CPU 11, the ROM 12, the RAM 13, and the memory unit 14 are connected to each other via a bus 15. The CPU 11, the ROM 12, and the RAM 13 function as a control unit 100. That is, the control unit 100 executes control processing related to the POS terminal 1, which will be described later, by the CPU 11 operating in accordance with the control program stored in the ROM 12 or the memory unit 14 and loaded in the RAM 13.

The RAM 13 includes a commodity information unit 131. The commodity information unit 131 stores commodity information (commodity name, price, and the like) corresponding to the commodity for which sales registration processing is performed based on the commodity code acquired from the symbol read by the code reader 28.

The memory unit 14 is a nonvolatile memory such as a hard disk drive (HDD) or a flash memory that stores information in a non-volatile manner. The memory unit 14 includes a control program 141, a commodity master database 142, and a cashier code 143. The control program 141 is a control program for controlling the POS terminal 1. The commodity master database 142 stores the commodity information corresponding to each commodity. The cashier code 143 is a cashier code for identifying a signed-in cashier. The sign-in is required at the time of starting use of the POS terminal. At that time, in order to specify the cashier which operates the POS terminal 1, a cashier code (for example, a cashier number) of the cashier is input. The entered cashier code is stored as cashier code 143.

In addition, the control unit 100 is connected to an operation panel 21, a cashier display device 22, a customer display device 23, a printing unit 24, and a code reader 28 via the bus 15 and a hardware controller 16. The operation panel 21 is a keyboard including a settlement key 211. The settlement key 211 is operated to begin settlement processing with respect to a transaction with a customer. All or a part of the operation panel 21 may be provided as a touch panel on the cashier display device 22.

The cashier display device22 displays information to a cashier operating the POS terminal 1. The customer display device 23 displays information to the customer. The printing device 24 includes, for example, a thermal printer and issues a receipt on which settlement information or the like regarding the purchased commodity is printed. The code reader 28 optically reads or photographs and reads the symbol attached to a commodity. Based on the symbol read by the code reader 28, the control unit 100 acquires the commodity code that specifies the commodity. Then, the control unit 100 searches the commodity master database 142 based on the acquired commodity code and reads the commodity information corresponding to the commodity.

In addition, the control unit 100 is connected to a communication interface 26 via the bus 15. The communication interface 26 provides for communication with another POS terminal 1 and store server 3 installed in the store via the communication line L1.

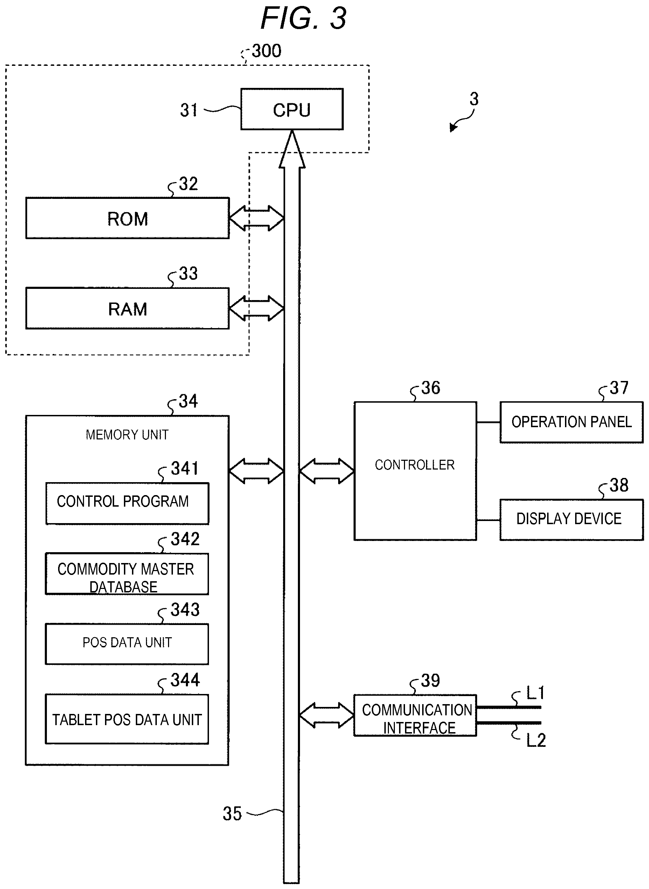

Next, the hardware configuration of the store server 3 will be described. FIG. 3 is a block diagram showing a hardware configuration of the store server 3. As shown in FIG. 3, the store server 3 includes a CPU 31, a ROM 32, a RAM 33, a memory unit 34, and the like. The CPU 31 controls various components. The ROM 32 stores various programs. The RAM 33 loads programs and various data. The memory unit 34 stores various programs. The CPU 31, the ROM 32, the RAM 33, and the memory unit 34 are connected to each other via a bus 35. The CPU 31, the ROM 32, and the RAM 33 function as a control unit 300. That is, the control unit 300 executes control processing related to the store server 3, which will be described later, by the CPU 31 operating in accordance with the control program stored in the ROM 32 or the memory unit 34 and loaded in the RAM 33.

The memory unit 34 is a nonvolatile memory such as an HDD or a flash memory that stores information in a non-volatile manner. The memory unit 34 includes a control program 341, a commodity master database 342, a POS data unit 343, and a tablet POS data unit 344. The control program 341 is a control program for control processing the store server 3. The commodity master database 342 stores the commodity information corresponding to each commodity. The commodity master database 342 stores the latest commodity information, and this commodity information is transmitted periodically (for example once a day) to the commodity master database 142 of the POS terminal 1.

The POS data unit 343 stores the first settlement information (settlement information including a cashier code) or the like received from the POS terminal 1 for each transaction. The tablet POS data unit 344 stores the second settlement information (settlement information not including a cashier code) or the like received from the tablet server 5 and generated by the tablet POS terminal 7 for each transaction. That is, the first settlement information and the second settlement information are separately stored.

In addition, the control unit 300 is connected to an operation panel 37 and a display device 38 via the bus 35 and a controller 36. The operation panel 37 is a keyboard having various keys. The display device 38 displays various kinds of information.

In addition, the control unit 300 is connected to a communication interface 39 via a bus 35. The communication interface 39 provides for communication with the POS terminal 1 installed in the store via the communication line L1. In addition, the communication interface 39 provides for communication with the tablet server 5 via the communication line L2.

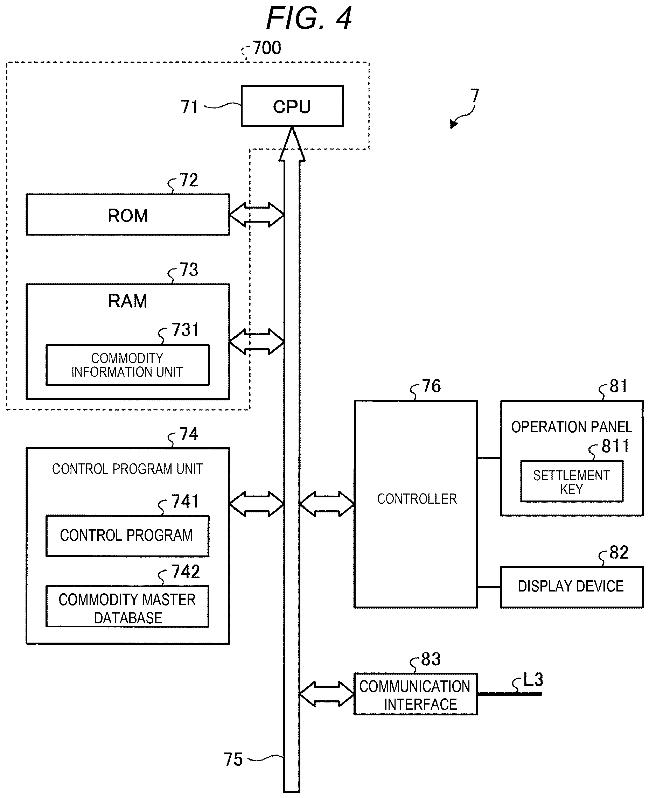

Next, the hardware configuration of the tablet POS terminal 7 will be described. FIG. 4 is a block diagram showing a hardware configuration of the tablet POS terminal 7. As shown in FIG. 4, the tablet POS terminal 7 includes a CPU 71, a ROM 72, a RAM 73, a memory unit 74, and the like. The CPU 71 controls various components. The ROM 72 stores various programs. The RAM 73 loads programs and various data. The memory unit 74 stores various programs. The CPU 71, the ROM 72, the RAM 73, and the memory unit 74 are connected to each other via a bus 75. The CPU 71, the ROM 72, and the RAM 73 function as a control unit 700. That is, the control unit 700 executes control processing related to the store server 3, which will be described later, by the CPU 71 operating in accordance with the control program stored in the ROM 72 or the memory unit 74 and loaded in the RAM 73.

The RAM 73 includes a commodity information unit 731. The commodity information unit 731 stores commodity information (commodity name, price, and the like) of the commodity for which sales registration processing is performed based on an entered commodity code. The memory unit 74 is a nonvolatile memory such as an HDD or a flash memory that stores information in a non-volatile manner. The memory unit 74 includes a control program 741 and a commodity master database 742. The control program 741 is a control program for control processing of the tablet POS terminal 7. The commodity master database 742 stores the commodity information corresponding to each commodity.

In addition, the control unit 700 is connected to an operation panel 81 and a display device 82 via the bus 75 and a controller 76. The operation panel 81 is a keyboard having various keys including a settlement key 811. The display device 82 displays various kinds of information.

In addition, the control unit 700 is connected to a communication interface 83 via a bus 75. The communication interface 83 provides for communication with the tablet server 5 via the wireless communication line L3.

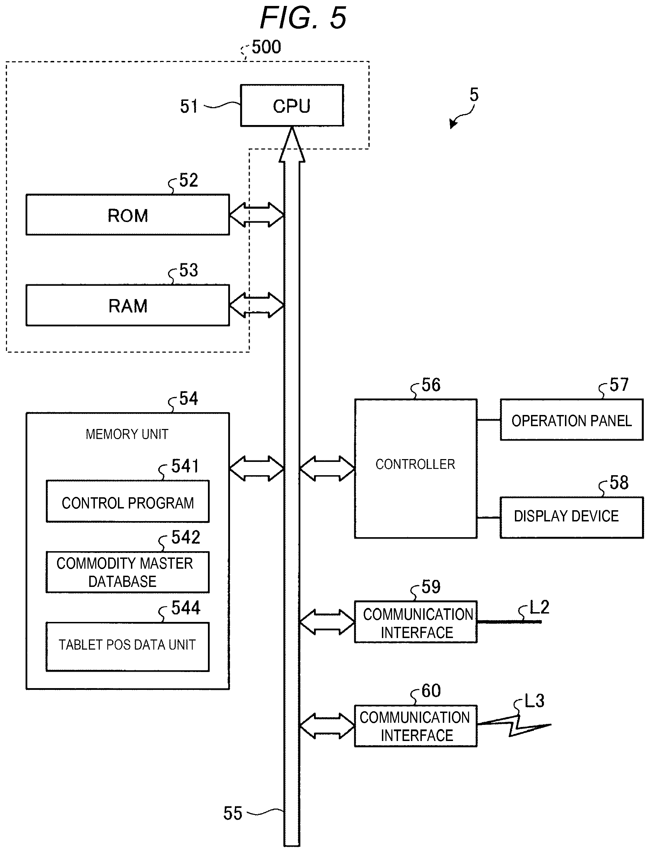

Next, the hardware configuration of the tablet server 5 will be described. FIG. 5 is a block diagram showing the hardware configuration of the tablet server 5. As shown in FIG. 5, the tablet server 5 includes a CPU 51, a ROM 52, a RAM 53, a memory unit 54, and the like. The CPU 51 controls various components. The ROM 52 stores various programs. The RAM 53 loads programs and various data. The memory unit 54 stores various programs. The CPU 51, the ROM 52, the RAM 53, and the memory unit 54 are connected to each other via a bus 55. The CPU 51, the ROM 52, and the RAM 53 function as a control unit 500. That is, the control unit 500 executes control processing related to the tablet server 5, which will be described later, by the CPU 51 operating in accordance with the control program stored in the ROM 52 or the memory unit 54 and loaded in the RAM 53.

The memory unit 54 is a nonvolatile memory such as an HDD or a flash memory that stores information in a non-volatile manner. The memory unit 54 includes a control program 541, a commodity master database 542, and a tablet POS data unit 544. The control program 541 is a control program for control processing of the tablet server 5. The commodity master database 542 stores the commodity information corresponding to each commodity. The tablet POS data unit 544 stores the second settlement information or the like received from the tablet POS terminal 7 and generated by the tablet POS terminal 7 for each transaction.

In addition, the control unit 500 is connected to an operation panel 57 and a display device 58 via the bus 55 and a controller 56. The operation panel 57 is a keyboard having various keys. The display device 58 displays various kinds of information.

In addition, the control unit 500 is connected to a communication interface 59 via the bus 55. The communication interface 59 provides for communication with the store server 3 via the communication line L2. In addition, the control unit 500 is connected to a communication interface 60 via the bus 55. The communication interface 60 provides for communication with the tablet POS terminal 7 via the wireless communication line L3.

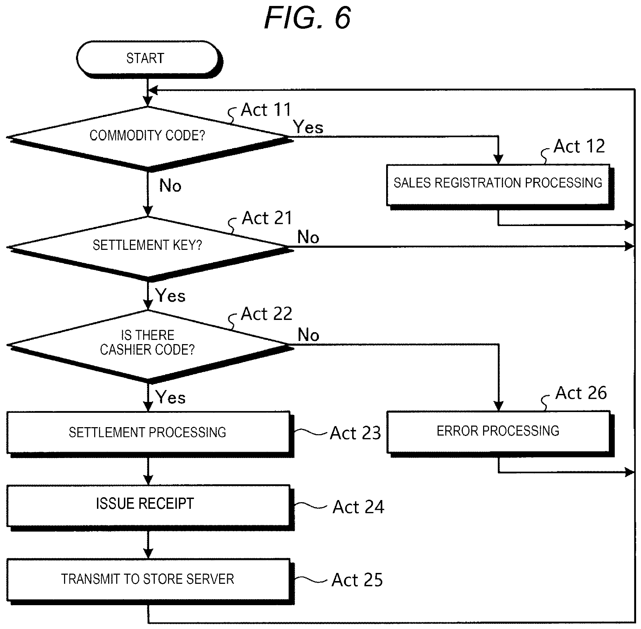

Hereinafter, control of the POS terminal 1, the store server 3, the tablet POS terminal 7, and the tablet server 5 will be described. FIG. 6 is a flowchart showing a flow of control processing of the POS terminal 1. As shown in FIG. 6, the control unit 100 of the POS terminal 1 determines whether or not the commodity code for specifying a commodity is acquired based on the symbol read by the code reader 28 (Act 11). If it is determined that the commodity code is acquired (Yes in Act 11), the control unit 100 reads the commodity information corresponding to the commodity from the commodity master database 142 by using the commodity code, executes sales registration processing, and stores the commodity information in the commodity information unit 131 (Act 12). Then, the control unit 100 returns to Act 11.

In addition, if it is determined that the commodity code is not acquired (No in Act 11), the control unit 100 determines whether or not the settlement key 211 is operated (Act 21). If it is determined that the settlement key 211 is operated (Yes in Act 21), the control section 100 determines whether or not a cashier code is stored in the cashier code unit 143 (Act 22). If it is determined that a cashier code is stored (Yes in Act 22), the control unit 100 executes settlement processing based on the commodity information stored in the commodity information unit 131 (Act 23). Then, the control unit 100 generates the first settlement information (including the cashier code) on which settlement processing is performed, drives the printing unit 24, and issues a receipt on which information based on the first settlement information for which the settlement processing is performed is printed (Act 24). Then, the control unit 100 transmits the generated first settlement information and or like to the store server 3 (Act 25). In the embodiment, each time a transaction with a customer is completed, the first settlement information is transmitted to the store server 3 as settlement information corresponding to the transaction. That is, the control unit 100 transmits the first settlement information to the store server 3 for each transaction. The control unit 100 may collectively transmit all of the first settlement information to the store server 3 at a predetermined timing (for example, once a day) without transmitting the first settlement information each time a transaction is complete. Then, the control unit 100 returns to Act 11.

In addition, if it is determined that the cashier code is not stored in the cashier code part 143 (No in Act 22), the control unit 100 displays an error message indicating that settlement processing may not be executed on the cashier display device 22 (Act 26). Then, the control unit 100 returns to Act 11. If it is determined that the settlement key 211 is not operated (No in Act 21), the control unit 100 returns to Act 11.

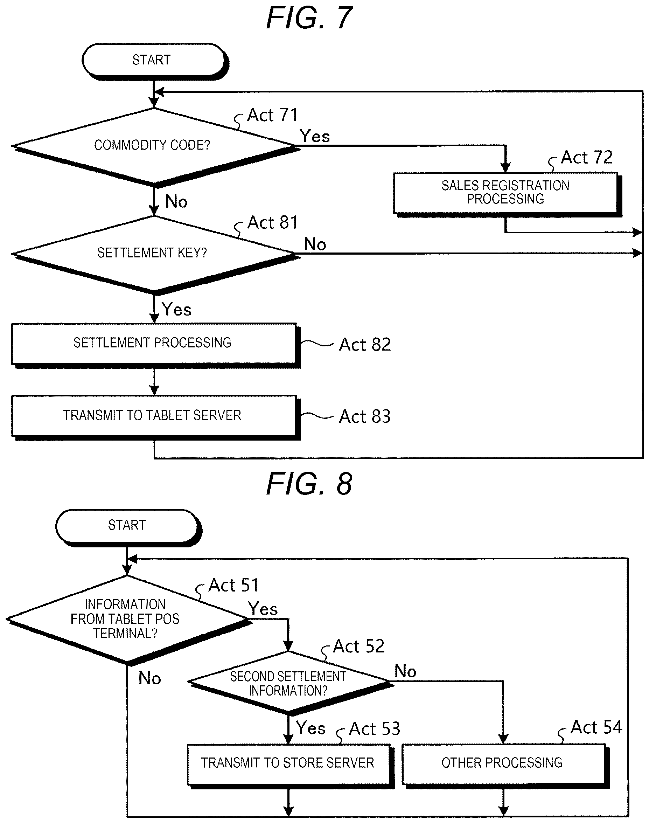

Next, the control processing of the tablet POS terminal 7 will be described. FIG. 7 is a flowchart showing a flow of control processing of the tablet POS terminal 7. As shown in FIG. 7, the control unit 700 of the tablet POS terminal 7 determines whether or not the commodity code is acquired based on the information on an entered commodity (Act 71). If it is determined that the commodity code is acquired (Yes in Act 71), the control unit 700 reads the commodity information corresponding to the commodity from the commodity master database 742 by using the commodity code, executes sales registration processing, and stores the commodity information in the commodity information unit 731 (Act 72). Then, the control unit 700 returns to Act 71.

In addition, if it is determined that the commodity code is not acquired (No in Act 71), the control unit 700 determines whether or not the settlement key 811 is operated (Act 81). If it is determined that the settlement key 811 is operated (Yes in Act 81), the control unit 700 executes settlement processing based on the commodity information stored in the commodity information unit 731 (Act 81). Then, the control unit 700 generates the second settlement information (not including the cashier code) for which settlement processing is performed and transmits the second settlement information relating to the transaction to the tablet server 5 each time the transaction with a customer is ended (ACT 83). That is, the control unit 700 transmits the second settlement information to the tablet server 5 for each transaction. The control unit 700 may collectively transmit all of the second settlement information to the tablet server 5 at a predetermined timing (for example, once a day) without transmitting the second settlement information each time a transaction is complete. Then, the control unit 700 returns to Act 11. In Act 81, if it is determined that the operation is not the operation of the settlement key 811 (No in Act 81), the control unit 700 returns to Act 71.

Next, the control processing of the tablet server 5 will be described. FIG. 8 is a flowchart showing a flow of control processing of the tablet server 5. In FIG. 8, the control unit 500 determines whether or not information is received from the tablet POS terminal 7 (Act 51). If it is determined that information is received from the tablet POS terminal 7 (Yes in Act 51), the control unit 500 determines whether or not the received information is the second set information (Act 52). When the received information includes, for example, commodity information, total amount, deposit amount, change amount, and the like, the control unit 500 determines that the information is the second settlement information.

If it is determined that the received information is the second settlement information (Yes in Act 52), the control unit 500 stores the second settlement information in the tablet POS data unit 544. Then, the second settlement information is transmitted to the store server 3 (Act 53). Then, the control unit 500 returns to Act 51. On the other hand, if it is determined that the received information is not the second settlement information (No in Act 52), the control unit 500 executes other processing (Act 54). Then, the control unit 500 returns to Act 51. In addition, if it is determined that information is not received from the tablet POS terminal 7 (No in Act 51), the control unit 500 returns to Act 51.

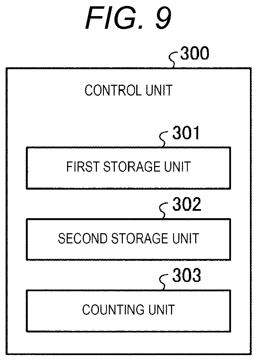

Hereinafter, control of the store server 3 will be described. FIG. 9 is a functional block diagram showing a functional configuration of the store server 3. The control unit 300 is programmed to function as a first storage unit 301, a second storage unit 302, and a counting unit 303 by executing the control program stored in the ROM 32 or the control program unit 341 of the memory unit 34.

When receiving the first settlement information generated by the POS terminal 1, including the information corresponding to the sold commodity, the first storage unit 301 stores the first settlement information on condition that predetermined information is included in the first settlement information.

When receiving the second settlement information generated by the tablet POS terminal 7, in which data items of the settlement information to be generated are different from the POS terminal 1, the second storage unit 302 stores the second settlement information separately from the first settlement information.

The counting unit 303 counts the sales data included in the first settlement information and the sales data included in the second settlement information.

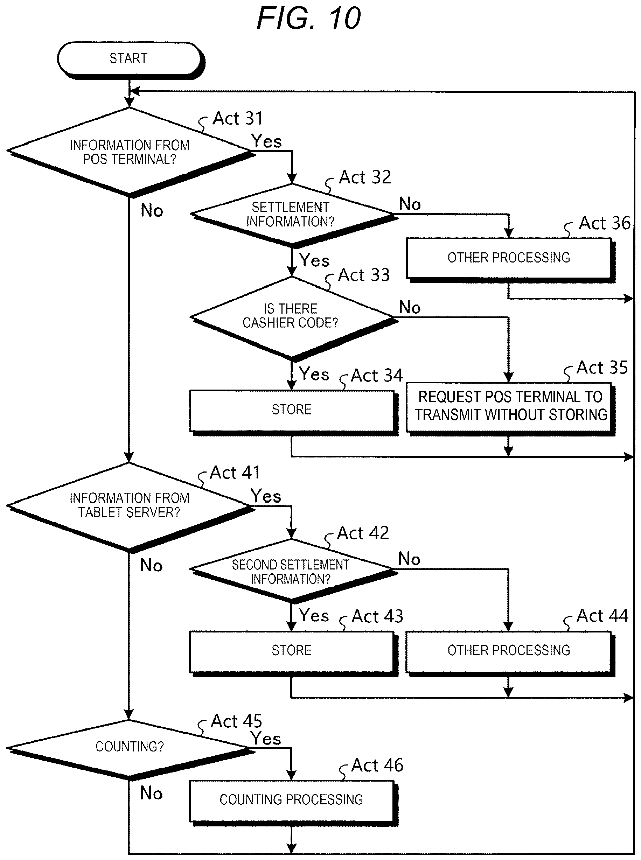

Next, the control processing of the store server 3 will be described. FIG. 10 is a flowchart showing a flow of control processing of the store server 3. In FIG. 10, the control unit 300 determines whether or not information is received from the POS terminal 1 (Act 31). If it is determined that the information is received from the POS terminal 1 (Yes in Act 31), the control unit 300 determines whether the received information is the first settlement information (Act 32). When the received information includes, for example, commodity information, total amount, deposit amount, change amount, and the like, the control unit 300 determines that the information is the first settlement information.

If it is determined that the received information is the first settlement information (Yes in Act 32), the control unit 300 determines whether or not the cashier code is included in the first settlement information (Act 33). If it is determined that the cashier code is included (Yes in Act 33), the control unit 300 (the first storage unit 301) stores the first settlement information including the cashier code in the POS data unit 343 (Act 34). The control unit 300 stores the received first settlement information for each transaction. Then, the control unit 300 returns to Act 31. On the other hand, if it is determined that the received first settlement information does not include the cashier code (No in Act 33), the control unit 300 does not store the received first settlement information in the POS data unit 343. Then, the control unit 300 requests the POS terminal 1 that transmitted the first settlement information to transmit the cashier code corresponding to the first settlement information (Act 35). Then, the control unit 300 returns to Act 31. If it is determined that the received information is not the first settlement information (No in Act 32), the control unit 300 executes other processing (Act 36). Then, the control unit 300 returns to Act 31. When receiving the cashier code requested in Act 35 from the POS terminal 1, the corresponding first settlement information at the time of reception is stored.

On the other hand, if it is determined in Act 31 that no information has been received from the POS terminal 1 (No in Act 31), the control unit 300 determines whether or not information is received from the tablet server 5 (Act 41). If it is determined that information is received from the tablet server 5 (Yes in Act 41), the control unit 300 determines whether the received information is the second set information (Act 42). When the received information includes, for example, commodity information, total amount, deposit amount, change amount, and the like, the control unit 300 determines that the information is the second settlement information. If it is determined that the received information is the second settlement information (Yes in Act 42), the control unit 300 (the second storage unit 302) stores the second settlement information in the tablet POS data unit 344 (Act 43). Then, the control unit 300 returns to Act 31.

If it is determined that the received information is not the second settlement information (No in Act 42), the control unit 300 executes other processing (Act 44). Then, the control unit 300 returns to Act 31.

In addition, in Act 41, if it is determined that information is not received from the tablet server 5 (No in Act 41), next, the control unit 300 determines whether or not it is the time for counting the sales data (Act 45). If it is determined that it is the time for counting the sales data (Yes in Act 45), the control unit 300 (counting unit 303) executes counting processing (Act 46). In the processing of Act 46, the control unit 300 generates summary data based on the sales data included in the first settlement information stored in the POS data unit 343 and the sales data included in the second settlement information stored in the tablet POS data section 344. These sales data are counted in the same manner. Then, the control unit 300 returns to Act 31. In addition, if it is determined that it is not the time for counting the sales data (No in Act 45), the control unit 300 returns to Act 31.

According to such an embodiment, when the cashier code is included in the first settlement information received from the POS terminal 1, the store server 3 stores the first settlement information. In addition, when receiving the second settlement information from the tablet server 5, the store server 3 stores the second settlement information separately from the first settlement information. Therefore, even if the data items are different, the store server 3 may receive the respective settlement information.

In addition, according to such an embodiment, in a POS system P, when the cashier code is included in the first settlement information received from the POS terminal 1, the store server 3 stores the first settlement information. In addition, the tablet server 5 stores the second settlement information received from the tablet POS terminal 7. The store server 3 receives the second settlement information from the tablet server 5 and stores the information separately from the first settlement information. Therefore, the POS system P may account for the respective settlement information even when the data items are different.

As described above, the embodiment of the present exemplary embodiment and modification examples thereof have been described, but the embodiment and modification examples are presented as examples and are not intended to limit the scope of the exemplary embodiment. The embodiment and modification examples thereof may be implemented in various other forms, and various omissions, substitutions, and changes can be made without departing from the gist of the exemplary embodiment. The embodiment and modification examples thereof are included in the scope of the exemplary embodiment and are included in the exemplary embodiment recited in the claims and the equivalent scope thereof.

For example, in the embodiment, the store server 3 is described as a server. However, the server may be a server other than the store server 3 (for example, a head office server installed in the headquarters that supervises the shop).

In addition, in the embodiment, the cashier code is described as predetermined information. However, the predetermined information is not limited to the cashier code, and other information may be used. That is, the predetermined information may be information (for example, a transaction number specifying a transaction, a register number specifying the POS terminal 1, and the like) that allows the store server 3 to determine that the received settlement information should be stored.

In addition, in the embodiment, the tablet POS terminal 7 has been described as an example of the second commodity sales data processing apparatus. However, the second commodity sales data processing apparatus is not limited to the tablet POS terminal 7. For example, the second commodity sales data processing apparatus may be a POS terminal installed at a venue where events and campaigns are held.

The program executed by the store server 3 of the embodiment is recorded and provided in a file in installable format or executable format in a computer-readable recording medium such as a CD-ROM, a flexible disk (FD), a CD-R, a digital versatile disk (DVD) or the like.

In addition, a program to be executed by the store server 3 of the embodiment may be stored on a computer connected to a network such as the Internet and the like and provided by being downloaded via the network. In addition, a program to be executed by the store server 3 of the embodiment may be provided or distributed via a network such as the Internet and the like.

In addition, a program to be executed by the store server 3 of the embodiment may be configured to be incorporated in advance in ROM or the like and provided.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the scope of the inventions. The accompanying claims and their equivalents are intended to cover such forms or modifications as would fall within the scope of the inventions.

## Claims

1. A server (3) for managing transaction settlement data generated by a first type of point-of-sale (POS) device and a second type of POS device, the server (3) comprising:
a storage device (301, 302);
a communication interface; and
a processor (31) is configured to:
control the communication interface to receive first settlement data generated by a first POS device (1) of the first type, the first settlement data corresponding to a completed transaction performed by the first POS device,
determine whether predetermined information is included with the first settlement data,
control the storage device to store the first settlement data only if the predetermined information is included,
control the communication interface to receive second settlement data generated by a second POS device (7) of the second type, the second settlement data corresponding to a completed transaction performed by the second POS device and not including the predetermined information,
control the storage device to store the second settlement data, and
perform an accounting processing on the stored first and second settlement data.

2. The server according to claim 1, wherein
the first settlement data is received from the first POS device that generated the first settlement data, and
the second settlement data is received from a tablet server.

3. The server according to claim 2, wherein the second settlement data is received from the tablet server at a predetermined timing.

4. The server according to claim 2 or 3, wherein the first settlement data is received from the first POS device that generated the first settlement data at a timing corresponding to when the transaction performed by the first POS device is completed.

5. The server according to any one of claims 2 to 4, wherein the first settlement data is received from the first POS device that generated the first settlement data at a predetermined timing.

6. The server according to any one of claims 1 to 5, wherein the predetermined information is a cashier code corresponding to a cashier who operated the first POS device for the completed transaction.

7. The server according to any one of claims 1 to 6, wherein, if the predetermined information is not included with the first settlement data, the processor is configured to control the communication interface to transmit, to the first POS device, a request to transmit the predetermined information.

8. A point-of-sale (POS) system comprising:
a first server (3);
at least one first POS device (1) of a first type in communication with the first server;
a second server (5) in communication with the first server (3); and
at least one second POS device (7) of a second type in communication with the second server (5), wherein
the first POS device (1) is configured to transmit, to the first server (3), first settlement data generated by the first POS device (1), the first settlement data corresponding to a completed transaction performed by the first POS device (1),
the second POS device (7) is configured to transmit, to the second server, second settlement data generated by the second POS device (1), the second settlement data corresponding to a completed transaction performed by the second POS device and not including the predetermined information,
the second server (5) is further configured to transmit, to the first server (3), the second settlement data, and
the first server (3) is conjured to:
determine whether predetermined information is included with the first settlement data transmitted from the first POS device, and stores the first settlement data only if the predetermined information is included,
store the second settlement data transmitted from the second server, and
perform an accounting processing on the stored first and second settlement data.

9. A method for managing transaction settlement data generated by a first type of point-of-sale (POS) device and a second type of POS device, the method comprising:
receiving first settlement data generated by a first POS device of the first type, the first settlement data corresponding to a completed transaction performed by the first POS device;
determining whether predetermined information is included with the first settlement data;
storing the first settlement data only if the predetermined information is included;
receiving second settlement data generated by a second POS device of the second type, the second settlement data corresponding to a completed transaction performed by the second POS device and not including the predetermined information;
storing the second settlement data; and
performing an accounting processing on the stored first and second settlement data.

10. The method according to claim 9, wherein
the first settlement data is received from the first POS device that generated the first settlement data, and
the second settlement data is received from a tablet server.

11. The method according to claim 10, wherein the second settlement data is received from the tablet server at a predetermined timing.

12. The method according to claim 10 or 11, wherein the first settlement data is received from the first POS device that generated the first settlement data at a timing corresponding to when the transaction performed by the first POS device is completed.

13. The method according to any one of claims 10 to 12, wherein the first settlement data is received from the first POS device that generated the first settlement data at a predetermined timing.

14. The method according to any one of claims 9 to 13, wherein the predetermined information is a cashier code corresponding to a cashier who operated the first POS device for the completed transaction.

15. The method according to any one of claims 9 to 14, further comprising:
if the predetermined information is not included with the first settlement data, transmitting, to the first POS device, a request to transmit the predetermined information.
